# EUROPEAN PATENT SPECIFICATION

(11) **EP 0 678 672 B1**
(45) Date of publication and mention of the grant of the patent: **02.06.1999**
(21) Application number: 95400507.0
(22) Date of filing: 10.03.1995
(51) Int. Cl.: F04C 15/04, B62D 5/04, B62D 5/06

(54) **Flow control mechanism for power steering**
Durchflusssteuervorrichtung für Servolenkung
Mécanisme de commande du débit pour direction assistée

(30) Priority: 22.04.1994 KR 9408556
(43) Date of publication of application: 25.10.1995
(73) Proprietor: KOREA INSTITUTE OF MACHINERY & METALS, Daejeon-Si (KR)
(72) Inventor: Kim, Hyong-Eui, Changwon-Si, Kyungnam (KR); Yun, So-Nam, Changwon-Si, Kyungnam (KR); Mun, Seong-Dae, Gumi-Si, Kyungbuk (KR)
(74) Representative: Hirsch, Marc-Roger

(56) References cited:
- US-A- 2 748 711
- US-A- 4 361 166
- PATENT ABSTRACTS OF JAPAN vol. 009 no. 223 (M-411) ,10 September 1985 & JP-A-60 080974 (TOYODA KOKI KK) 8 May 1985,

## Description

### FIELD OF THE INVENTION

The present invention relates to a mechanism for a power steering device of automobiles. Particularly,the present invention relates to a flow control mechanism for power steering in which there is formed a combination consisting of: a valve for controlling the flow amount of the hydraulic fluid to be supplied to the power steering device by a pump (which is driven by the engine); and a valve installed for protecting the hydraulic circuit and for a stable operation of the pump.

### BACKGROUND OF THE INVENTION

Generally,a vane pump is widely used as the power steering pump, and this pump is driven by an internal combustion engine which is installed on the automobile. The hydraulic fluid is sucked by the pump so as to produce a pressure,and,by utilizing this pressure,the manual steering torque is controlled. In the power steering device, when the vehicle runs slow or is stopped, a sufficient steering force is required, because the ground contact resistance acts in a high degree.

However,during a fast running in which the ground contact resistance is low ( in this case, the revolution speed of the internal combustion engine is very high, and therefore, the power steering pump supplies a large amount of hydraulic fluid), a large steering force is not required. Therefore, if the hydraulic power is used as it is, then a problem occurs in the stability of the steering. Therefore,if the hydraulic power source which is increased proportionately to the engine speed is applied to the power steering without any adjustment, it becomes undesirable.

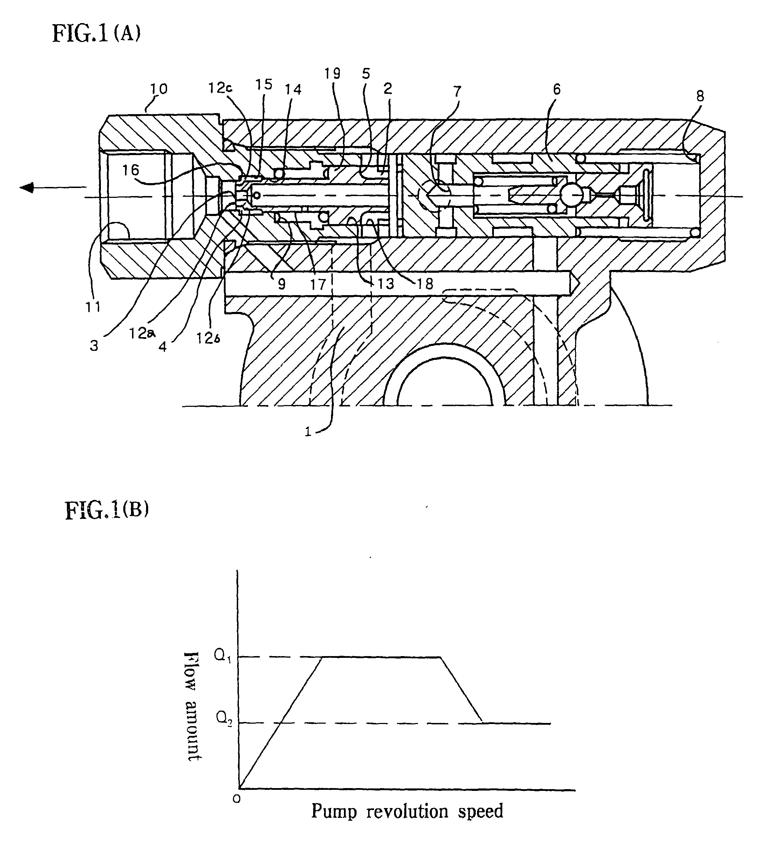

Therefore,in the usual cases,a hydraulic control mechanism (pressure compensating hydraulic control valve + pressure control valve) having a hydraulic characteristics as shown in FIG. 1B is used.

As shown in FIG. 1B, in a low speed region in which a large steering force is required, a certain amount of hydraulic fluid Q1 is supplied. On the other hand, in a high speed region in which a large steering force is not required, the hydraulic fluid amount is reduced to Q₂ proportionately to the velocity of the automobile. This method is called a flow down method.

FIG. 1A is a sectional view showing a conventional apparatus of the type shown in JP-A-61 64583. Referring to this drawing,the hydraulic fluid which is discharged by a pump passes through an inlet fluid path 1, a main orifice 2,a first orifice 3 formed in a sub-spool 5 and a second orifice 4 to be supplied to an actuator. The control of the hydraulic fluid which is supplied to the actuator is done in such a manner that the sub-spool 5 move to the left owing to the pressure difference produced between the front and the rear of the first orifice 3 and the second orifice 4, and that the sectional area is reduced owing to the movement of the sub-spool 5. The extra discharge amount from the pump is bypassed, because a main spool 6 moves to the left by the elastic force of a spring 8 which supports the main spool 6. During a low speed revolution of the engine, small pressure differences are produced between the front and the rear of the first orifice 3 and the second orifice 4, because the discharge amount of the pump is small.Therefore,the hydraulic fluid is supplied to the actuator proportionately to the revolution speed of the internal combustion engine.However,when the discharge amount of the pump increases,pressure differences begin to be produced between the front and the rear of the first orifice 3 and the second orifice 4, and the main spool 6 moves to the right against the elastic force of the spring 8 supporting the main spool 6,so that the hydraulic fluid would be bypassed proportionately to the aperture of the main spool and the pressure difference.Consequently,the flow amount Q1 is supplied to the actuator as shown in FIG. 1B.

When the revolution speed of the internal combustion engine increases,and thus,if the discharge amount of the pump increases, the pressure differences between the front and the rear of the first orifice 3 and the second orifice 4 are increased. Proportionately to this,the sub-spool 5 moves to the left against the elastic force of a sub-spring 9 which supports the sub-spool 5. Meanwhile,the main spool 6 moves to the right against the elastic force of the spring 8, so that the hydraulic fluid would be bypassed proportionately to the aperture of the main spool 6 and the pressure difference.

Thus as shown in FIG. lB,the flow amount Q2 is supplied to the actuator,thereby assuring a stability during the steering.

However,in the above described hydraulic control mechanism,a tapered portion 12c and projected portions 12a and 12b which are formed on the sub-spool 5 may cause a variation of the aperture area. Consequently, an imbalance is caused in the orifice characteristics, so that the characteristics of the sub-spool 5 may be affected, and that the hydraulic fluid supplied to the actuator would become unstable. Consequently,the stability of the power steering is adversely affected.The aperture area of the main orifice 2 is varied in a linear form over a certain region,but if the region is departed,the variation becomes non-linear,with the result that an accurate hydraulic control becomes difficult.Further,the pressure pulse of the pump can be transmitted to the actuator.

US-A-2 748 711 discloses a flow control mechanism, with a valve body having a cylindrical spool hole, an inlet port, a drain port and an outlet port; a main spool slidably disposed within the cylindrical spool hole of the valve body and having a main bore, and a sub-spool slidably disposed within the main bore of the main spool. The sub-spool is movable to discharge fluid from the inlet port to the drain port in case of extrememy high pressure conditions. The main spool is movable to direct fluid from the inlet port to the outlet port or to the drain port, and thus control the required amount of flow to the outlet port.

US-A-4 361 166 discloses a flow control mechanism of the type described in reference to figure 1A, where two spools are slidably mounted inside of the same bore of the mechanism.

### Summary of the invention.

The present invention is intended to overcome the above described disadvantages of the conventional techniques.

Therefore it is the object of the invention to provide a flow control mechanism for power steering, in which a sub-spool is inserted into a main spool, so that the control of hydraulic fluid would be possible in a wider range, and that the control may be carried out in an accurate manner.

### BRIEF DESCRIPTION OF THE DRAWINGS

The above object and other advantages of the present invention will become more apparent by describing in detail the preferred embodiment of the present invention with reference to the attached drawings in which:
FIG. 1 illustrates the conventional mechanism, in which:
   FIG. 1A is a sectional view of the conventional apparatus; and
   FIG. 1B is a graphical illustration showing the flow amount characteristics;
FIG. 2 is a sectional view showing a preferred embodiment of the present invention, in which:
   FIG. 2A is a plan view of the mechanism of the present invention; and
   FIG. 2B is a frontal view of the mechanism of the present invention;
FIG. 3 illustrates the hydraulic circuit for activating the control valves;
FIG. 4 illustrates the flow amount characteristics for the preferred embodiment of the present invention;
FIG. 5 illustrates the actuating state of the spool for the control valve; in which:
   FIG. 5A illustrates a first switched state;
   FIG. 5B illustrates a second switched state; and
   FIG. 5C illustrates a third switched state; and
FIG. 6 is a sectional view showing a second embodiment of the present invention.

### DESCRIPTION OF THE PREFERRED EMBODIMENTS

FIG. 1 illustrates the conventional mechanism, in which: FIG. 1A is a sectional view of the conventional apparatus; and FIG. 1B is a graphical illustration showing the flow amount characteristics.

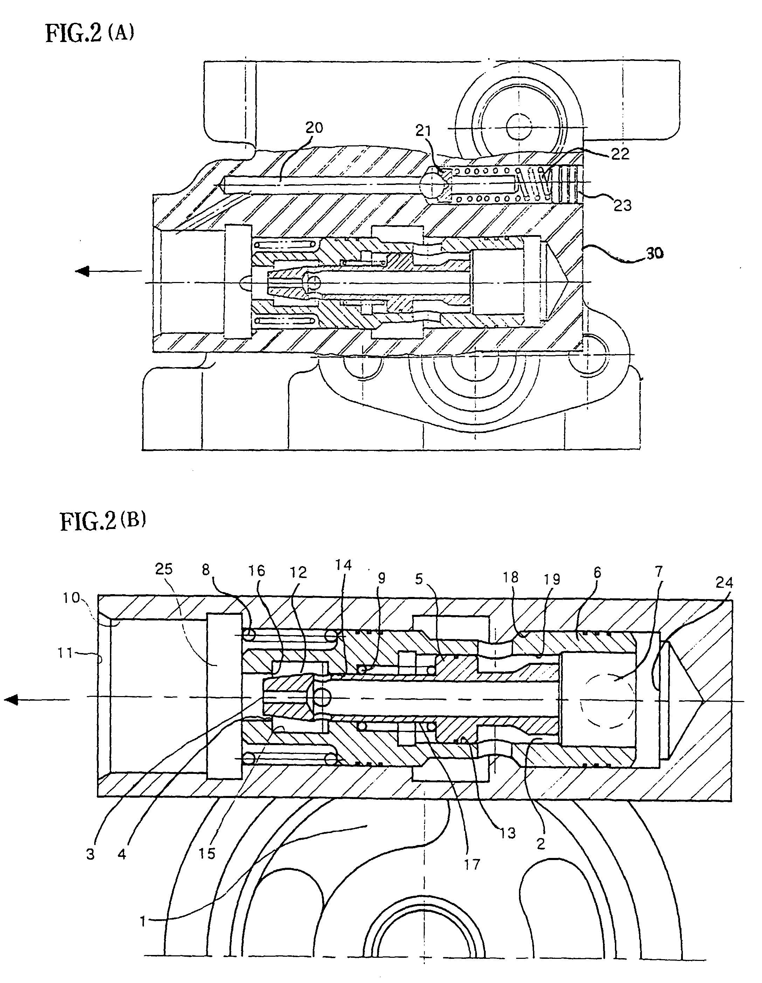

The overall constitution of the present invention will be described referring to FIG. 2.

The flow control mechanism for the power steering device includes a pump and a valve body which are integrally formed.The valve body is provided with an accommodating hole 18 for accommodating a main spool 6 into which a sub-spool 5 is inserted.Thus the overall bulk is reduced, and the energy saving characteristics becomes superior.Further, a relief valve 21 which is for protecting the circuit is exposed to the outside,so that its set pressure can be tested even in the assembled state.

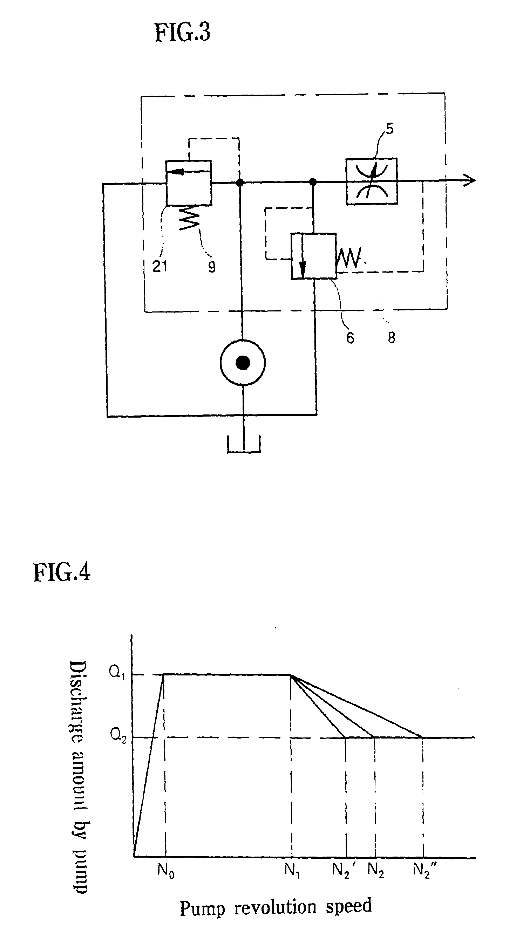

FIG. 3 illustrates a hydraulic circuit for activating the control valve.

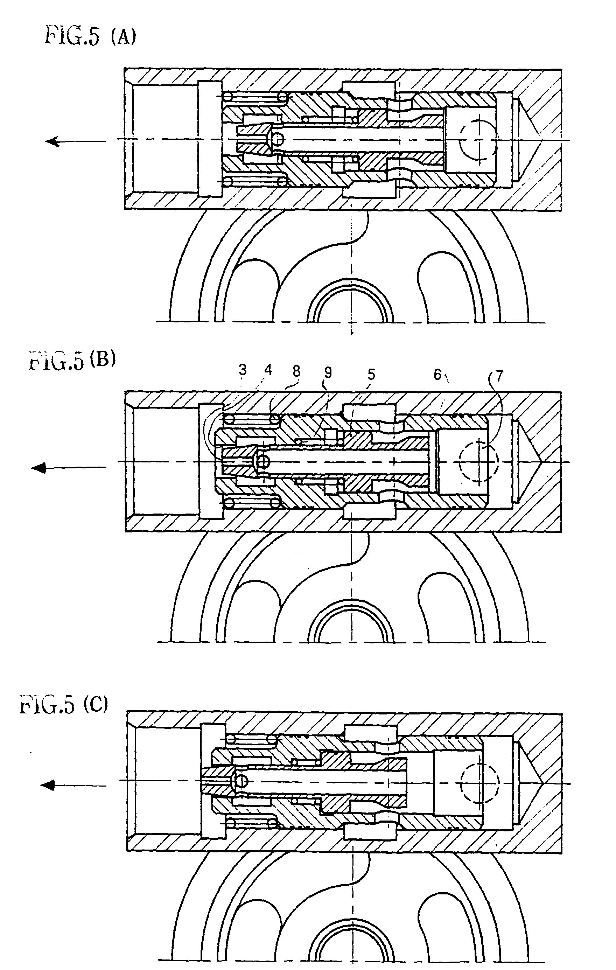

FIG. 4 illustrates the flow amount characteristics for the preferred embodiment of the present invention.FIG. 5 illustrates the actuating state of the spool for the control valve.

In describing the present invention,the same reference codes are assigned to avoid the confusion with the conventional mechanism.However, the present invention is quite different from the conventional mechanism,and therefore, only the portions which corresponds to the general hydraulic circuit will be skipped. Therefore, descriptions will be made on the main spool 6, the sub-spool 5 and the hydraulic circuit and the actuation state of the relief valve 21.

The hydraulic fluid which is discharged by the pump passes through an inlet fluid path 1 and a main orifice 2 to be supplied to a first orifice 3 and a second orifice 4 which are formed on the sub-spool 5.Then the hydraulic fluid which has passed through the orifices are supplied to the actuator, so that a steering force needed to the steering can be obtained.

In the hydraulic circuit of FIG. 3,the hydraulic fluid which discharged from the hydraulic fluid source is easily supplied through the sub-spool 5 to the actuator.When the pressure differences between the front and the rear of the first and second orifices 3 and 4 are increased,the main spool 6 is opened, so that the hydraulic fluid to be supplied from the hydraulic fluid source to the actuator would be bypassed through the main spool 6.If the circuit pressure reaches a pre-set pressure, in order that the stabilities of the circuit and the pump can be maintained,the relief valve 21 is opened, so that the circuit pressure would not rise over the pre-set pressure.

The pump which is connected to the engine of the automobile by means of a V belt discharges a flow amount proportionate to the revolution speed of the engine,so that the discharged flow amount would be supplied to the actuator.

Under this condition,during a low speed region Nl,the pressure difference between a first pressure chamber 24 and a second pressure chamber 25 is small,and therefore, a flow amount proportionate to the revolution speed of the engine is supplied to the actuator. Then as shown in FIG. 5A,if the revolution speed rises (N0 - N1),then a pressure difference begins to be formed between the first pressure chamber 24 and the second pressure chamber 25,and there is generated a force equivalent to the pressure difference multiplied by the sectional area of the pressure receiving portion of the main spool.

Owing to this force,the main spool moves as much as the spring force (spring constant x displacement) to the left so as to open a drain port, so that a part of the hydraulic fluid would be bypassed,thereby supplying a certain flow amount Q1.

If the revolution speed is increased further (N1 - N2),then as shown in FIG. 5B,he pressure of the first pressure chamber 24 rises,so that the main spool 6 would overcome the elastic force of the supporting spring 8 so as to move to the left.At the same time,a force equivalent to the pressure difference multiplied by the pressure receiving sectional area of the sub-spool 5 is built up, so that the sub-spool 5 would be pushed to the left. Consequently, the aperture area of the second orifice is slowly reduced, with the result that the flow amounts Q1 - Q2 characteristics are formed.

When the revolution speed further rises (N2), then as shown in FIG. 5C,a poppet portion 12 of the sub-spool 5 completely contacts to a seat portion 16 of the main spool. From this point,the force which reaches the sectional area of the pressure receiving portion of the sub-spool 5 acts on the main spool 6. Consequently,the aperture area of the drain port portion 7 is increased,and a flow amount which is proportionate to the pressure difference between the first pressure chamber and the drain port portion is bypassed, with the result that the flow amount supplied to the actuator attains to a certain amount Q2.

Further,if the load of the steering is large,the circuit pressure rises over the pre-set pressure,and this over-pressure causes problems in the circuit stability. Therefore,in order to eliminate the circuit instability, the relief valve 21 is installed. If the circuit pressure rises over the pre-set pressure,the relief valve 21 is opened,and the hydraulic fluid of a guide fluid path 20 is drained through the drain port 7,so that a stabled operation would be possible.

In the conventional mechanism, the spring 8 for supporting the main spool 6 and the spring 9 for supporting the sub-spool 5 are separately actuated, with the result that the control of the flow down is not sufficiently smooth.

On the other hand,according to the present invention,the spring 8 for supporting the main spool and the spring 9 for supporting the sub-spool are serially constituted. Therefore, there can be adjusted the gradient by which the flow amount is subjected to a flow down from Q1 to Q2 under an arbitrary revolution speed of the engine (N1 - N2', or N1 -N2"). Therefore the control range is large,so that an accurate and comfortable steering characteristics can be obtained both in the low speed and high speed. Further,a large damping effect can be obtained compared with the conventional mechanisms,and therefore,the actuator is greatly freed from the influence of the pressure pulses.Further,only the spring constants for the springs 8 and 9 for supporting the main spool 6 and the sub-spool 5 are varied, and therefore, the variation of the controlled fluid due to the processing error can be adjusted.

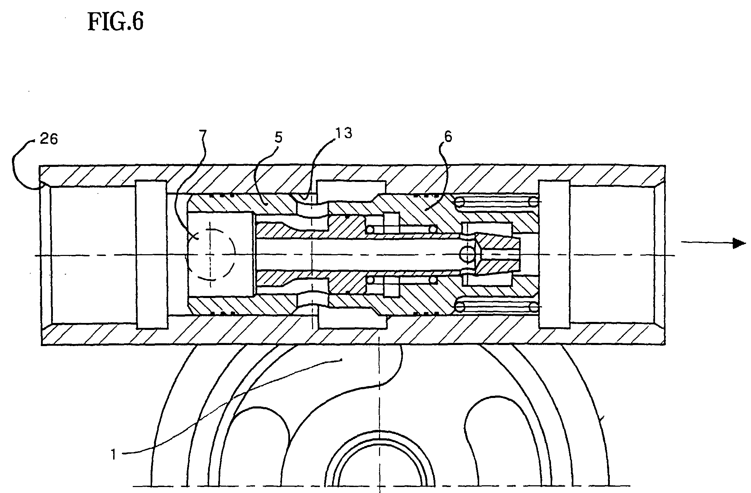

FIG. 6 is a sectional view showing a second embodiment of the present invention.

The inlet fluid path 1 of the flow control mechanism according to the present invention is provided with main spool accommodating holes 13 in a symmetrical form.If one direction is blocked by using a plug,then the assembling can be made from any direction.Therefore, a flexibility is provided when changing the design and the installation space during its attachment on an automobile.

## Claims

1. A flow control mechanism comprising:
- a valve body (30) having a cylindrical spool hole (18), an inlet port, a drain port and an outlet port (11);
- a main spool (6) slidably disposed within the cylindrical spool hole (18) of the valve body and being movable in response to a pressure differential between the inlet port and the outlet port so as to by-pass an excess flow to the drain port, the main spool having a main bore (19) and an orifice (4) at one end of the main bore through which a fluid is communicated from the inlet port to the outlet port; and
- a sub-spool (5) slidably disposed within the main bore (19) of the main spool and having an orifice (3) at one end thereof, the sub-spool being movable relative to the main spool in response to a pressure differential between the inlet port and the outlet port so as to reduce the aperture area of the orifice of the main spool and control the required fluid flow from the inlet port to the outlet port.

2. A flow control mechanism as claimed in claim 1, further comprising pressure relief means (21) for controlling the maximum pressure of the fluid flowing from the inlet port to the outlet port.

3. A flow control mechanism as claimed in claim 1 or 2, wherein the valve body comprises a second opening independent from the cylindrical spool hole (18); and wherein the pressure relief means is disposed in the second opening.

4. A flow control mechanism as claimed in claim 1, 2 or 3, further comprising means for limiting the movement of the sub-spool in a direction toward the orifice of the main spool.

5. A flow control mechanism as claimed in claim 4, wherein the limiting means comprises a shoulder portion formed integrally with the main spool.

6. A flow control mechanism as claimed in one of claims 1 to 5, further comprising a spring (9) disposed in the main bore (19) of the main spool (6) for biasing the sub-spool (5) in a direction away from the orifice (4) of the main spool.

7. A flow control mechanism as claimed in one of claims 1 to 6, wherein the main bore (19) of the main spool (6) has first and second pressure chambers (24, 25), and wherein the main spool is movable in response to a pressure differential between the first and second pressure chambers.

8. A flow control mechanism as claimed in one of claims 1 to 7, wherein the sub-spool has a pair of land portions (13, 14) having different cross-sectional areas.

9. A fluid control mechanism as claimed in one of claims 1 to 8, wherein the sub-spool has a tapered portion (12) which extends into the orifice (4) of the main spool to form a variable orifice in cooperation with the orifice (4) of the main spool; and wherein the tapered portion of the sub-spool reduces the volume of the fluid passing through the orifice of the main spool when the sub-spool is moved outwardly of the main bore of the main spool in a direction toward the orifice of the main spool.

10. A flow control mechanism as claimed in claim 9; further comprising pressure relief means (21) for controlling the pressure of the fluid flowing from the inlet port to the outlet port.

11. A flow control mechanism as claimed in claim 9 or 10, wherein the valve body comprises a second opening independent from the cylindrical spool hole (18); and wherein the pressure relief means is disposed in the second opening.

12. A flow control mechanism as claimed in one of claims 9 to 11, further comprising means for limiting the movement of the sub-spool in a direction toward the orifice of the main spool.

13. A flow control mechanism as claimed in claim 12, wherein the limiting means comprises a shoulder portion formed integrally with the main spool.

14. A flow control mechanism as claimed in one of claims 9 to 13, further comprising a spring (9) disposed in the main bore (19) of the main spool (6) for biasing the sub-spool (5) in a direction away from the orifice (4) of the main spool.

15. A flow control mechanism as claimed in one of claims 9 to 14, wherein the main bore (19) of the main spool (6) has first and second pressure chambers (24, 25), and wherein the main spool is movable in response to a pressure differential between the first and second pressure chambers.

16. A flow control mechanism as claimed in one of claims 9 to 15, wherein the sub-spool has a pair of land portions (13, 14) having different cross-sectional areas; and wherein the fluid flow is subjected to a stepwise flow down to reduce the flow proportionately to the pressure of the pump, in response to pressure differentials across the land portions.

17. A fluid control mechanism as claimed in one of claims 9 to 16, wherein the sub-spool has a tapered portion (12) which extends into the orifice (4) of the main spool to form a variable orifice in cooperation with the orifice (4) of the main spool; and wherein the tapered portion of the sub-spool reduces the volume of the fluid passing through the orifice of the main spool when the sub-spool is moved outwardly of the main bore of the main spool in a direction toward the orifice of the main spool.

## Patentansprüche

1. Ein Durchflußsregelmechanismus umfassend :
- einen Ventilgehäuse (30) mit einer zylindrischen Schieberöffnung (18), einer Einlaßöffnung, einer Ablauföffnung und einer Auslaßöffnung (11) ;
- einen gleitend in der zylindrischen Schieberöffnung (18) des Ventilgehäuses montierten Hauptschieber (6), welche in Reaktion auf ein Differenzdruck zwischen der Einlaßöffnung und Auslaßöffnung beweglich ist, um einen überschüssigen Fluß zur Ablauföffnung umzuleiten, wobei der Hauptschieber eine Hauptbohrung (19) und eine Öffnung (4) an einem Ende der Hauptbohrung aufweist, über welche ein Fluid mit der Einlaßöffnung und der Auslaßöffnung in Verbindung steht ; und
- einen gleitend in der Hauptbohrung (19) des Hauptschiebers montierten Unterschieber (5), welcher eine Öffnung (3) an einem seiner Enden aufweist, wobei der Unterschieber in Reaktion auf ein Differenzdruck zwischen der Einlaßöffnung und Auslaßöffnung beweglich ist, derart, daß die Öffnungsfläche der Hauptschieberöffnung verkleinert und der benötigte Durchfluß von der Einlaßöffnung zur Auslaßöffnung geregelt wird.

2. Ein Durchflußregelmechanismus gemäß Anspruch 1, weiter umfassend Druckbegrenzungsmittel (21) zur Regelung des Maximaldrucks des von der Einlaßöffnung zur Auslaßöffnung fließenden Fluids.

3. Ein Durchflußregelmechanismus gemäß Anspruch 1 oder 2, in dem das Ventilgehäuse eine zweite, von der zylindrischen Schieberöffnung (18) unabhängige Öffnung aufweist ; und in dem die Druckbegrenzungsmittel in der zweiten Öffnung angebracht sind.

4. Ein Durchflußregelmechanismus gemäß Anspruch 1, 2 oder 3, weiter umfassend Mittel zur Bewegungsbegrenzung des Unterschiebers in Richtung der Hauptschieberöffnung.

5. Ein Durchflußregelmechanismus gemäß Anspruch 4, in dem die Begrenzungsmittel ein mit dem Hauptschieber einstückig geformtes Schulterteil umfassen.

6. Ein Durchflußregelmechanismus gemäß einem der Ansprüche 1 bis 5, weiter umfassend eine in der Hauptbohrung (19) des Hauptschiebers (6) angebrachte Feder (9) um den Unterschieber (5) in bezüglich der Hauptschieberöffnung (4) entgegengesetzter Richtung unter Vorspannung zu setzen.

7. Ein Durchflußregelmechanismus gemäß einem der Ansprüche 1 bis 6, in dem die Hauptbohrung (19) des Hauptschiebers (6) erste und zweite Druckkammern (24, 25) aufweist und in dem der Hauptschieber in Reaktion auf ein Differenzdruck zwischen der ersten und der zweiten Druckkammer beweglich ist.

8. Ein Durchflußregelmechanismus gemäß einem der Ansprüche 1 bis 7, in dem der Unterschieber ein Paar Auflageflächen (13, 14) mit verschiedenen Querschnittsflächen aufweist.

9. Ein Durchflußregelmechanismus gemäß einem der Ansprüche 1 bis 8, in dem der Unterschieber ein spitz zulaufendes Teil (12) aufweist, die sich in die Öffnung (4) des Hauptschiebers hinein erstreckt, um in Zusammenwirkung mit der Öffnung (4) des Hauptschiebers eine variable Öffnung zu bilden ; und in dem das spitz zulaufende Teil des Unterschiebers das Volumen des durch die Öffnung des Hauptschiebers fließenden Fluids vermindert, wenn der Unterschieber von der Hauptbohrung des Hauptschiebers nach außen in Richtung zur Hauptschieberöffnung hin bewegt wird.

10. Ein Durchflußregelmechanismus gemäß Anspruch 9, weiter umfassend Druckbegrenzungsmittel (21) für die Druckregelung des von der Einlaßöffnung zur Auslaßöffnung fließenden Fluids.

11. Ein Durchflußregelmechanismus gemäß Anspruch 9 oder 10, in dem das Ventilgehäuse eine zweite, von der zylindrischen Schieberöffnung (18) unabhängige Öffnung aufweist ; und in dem die Druckbegrenzungsmittel in der zweiten Öffnung angebracht sind.

12. Ein Durchflußregelmechanismus gemäß einem der Ansprüche 9 bis 11, weiter umfassend Mittel zur Bewegungsbegrenzung des Unterschiebers in Richtung der Hauptschiebernöffnung.

13. Ein Durchflußregelmechanismus gemäß Anspruch 12, in dem die Begrenzungsmittel ein mit dem Hauptschieber einstückig geformtes Schulterteil umfassen.

14. Ein Durchflußregelmechanismus gemäß einem der Ansprüche 9 bis 13, weiter umfassend eine in der Hauptbohrung (19) des Hauptschiebers (6) angebrachte Feder (9) für die Vorspannung des Unterschiebers (5) in der Hauptschieberöffnung (4) entgegengesetzter Richtung.

15. Ein Durchflußregelmechanismus gemäß einem der Ansprüche 9 bis 14, in dem die Hauptbohrung (19) des Hauptschiebers (6) erste und zweite Druckkammern (24, 25) aufweist und in dem der Hauptschieber in Reaktion auf ein Differenzdruck zwischen der ersten und der zweiten Druckkammer beweglich ist.

16. Ein Durchflußregelmechanismus gemäß einem der Ansprüche 9 bis 15, in dem der Unterschieber ein Paar Auflageflächen (13, 14) mit verschiedenen Querschnittsflächen aufweist; und in dem der Durchfluß des Fluids in Reaktion auf einen Differenzdruck zwischen den Auflageflächen einer stufenweisen, dem Pumpendruck proportionalen Durchflußreduzierung unterworfen wird.

17. Ein Durchflußregelmechanismus gemäß einem der Ansprüche 9 bis 16, in dem der Unterschieber ein spitz zulaufendes Teil (12) aufweist, die sich in die Öffnung (4) des Hauptschiebers hinein erstreckt, um in Zusammenwirkung mit der Öffnung (4) des Hauptschiebers eine variable Öffnung zu bilden ; und in dem das spitz zulaufende Teil des Unterschiebers das Volumen des durch die Öffnung des Hauptschiebers fließenden Fluids vermindert, wenn der Unterschieber von der Hauptbohrung des Hauptschiebers nach außen in Richtung zur Hauptschieberöffnung hin bewegt wird.

## Revendications

1. Un dispositif de contrôle de débit comprenant :
- un corps de valve (30) présentant un alésage cylindrique (18) de tiroir, un orifice d'entrée, un orifice de purge et un orifice de sortie (11) ;
- un tiroir principal (6) disposé coulissant à l'intérieur de l'alésage cylindrique (18) de tiroir du corps de valve et mobile en réponse à une différence de pression entre l'orifice d'entrée et l'orifice de sortie, de façon à dériver un débit en excès vers l'orifice de purge, le tiroir principal comportant un alésage principal (19) et un orifice (4) à l'extrémité de l'alésage principal, et à travers lequel un fluide est mis en communication de l'orifice d'entrée vers l'orifice de sortie ; et
- un tiroir secondaire (5) disposé coulissant à l'intérieur de l'alésage principal (19) du tiroir principal et présentant un orifice (3) à l'une de ses extrémités, le tiroir secondaire étant mobile par rapport au tiroir principal en réponse à une différence de pression entre l'orifice d'entrée et l'orifice de sortie, de façon à réduire la surface d'ouverture de l'orifice du tiroir principal, et à contrôler le débit de fluide requis de l'orifice d'entrée vers l'orifice de sortie.

2. Un dispositif de contrôle de débit selon la revendication 1, comprenant en outre des moyens (21) de décharge de pression pour contrôler la pression maximum du fluide s'écoulant de l'orifice d'entrée vers l'orifice de sortie.

3. Un dispositif de contrôle de débit selon la revendication 1 ou 2, dans lequel le corps de valve comporte une deuxième ouverture indépendante de l'alésage cylindrique (18) de tiroir; et dans lequel les moyens de décharge de pression sont disposés dans la deuxième ouverture.

4. Un dispositif de contrôle de débit selon la revendication 1, 2 ou 3, comprenant en outre des moyens pour limiter les déplacements du tiroir secondaire dans la direction vers l'orifice du tiroir principal.

5. Un dispositif de contrôle de débit selon la revendication 4, dans lequel les moyens de limitation comportent une partie d'épaulement formée monobloc avec le tiroir principal.

6. Un dispositif de contrôle de débit selon l'une des revendications 1 à 5, comprenant en outre un ressort (9) disposé dans l'alésage principal (19) du tiroir principal (6) pour solliciter le tiroir secondaire (5) dans une direction s'éloignant de l'orifice (4) du tiroir principal.

7. Un dispositif de contrôle de débit selon l'une des revendications 1 à 6, dans lequel l'alésage principal (19) du tiroir principal (6) comporte des première et deuxième chambres de pression (24, 25), et dans lequel le tiroir principal est mobile en réponse à une différence de pression entre la première et la deuxième chambres de pression.

8. Un dispositif de contrôle de débit selon l'une des revendications 1 à 7, dans lequel le tiroir secondaire comporte deux parties de portée (13, 14) présentant des surfaces de section transversale différentes.

9. Un dispositif de contrôle de débit selon l'une des revendications 1 à 8, dans lequel le tiroir secondaire présente une partie conique ou effilée (12) qui s'étend dans l'orifice (4) du tiroir principal pour former un orifice variable en coopération avec l'orifice (4) du tiroir principal ; et dans lequel la partie conique du tiroir secondaire réduit le volume du fluide traversant l'orifice du tiroir principal lorsque le tiroir secondaire est déplacé vers l'extérieur de l'alésage principal du tiroir principal dans la direction vers l'orifice du tiroir principal.

10. Un dispositif de contrôle de débit selon la revendication 9, comprenant en outre des moyens (21) de décharge de pression pour contrôler la pression du fluide s'écoulant de l'orifice d'entrée vers l'orifice de sortie.

11. Un dispositif de contrôle de débit selon la revendication 9 ou 10, dans lequel le corps de valve comporte une deuxième ouverture indépendante de l'alésage cylindrique (18) de tiroir; et dans lequel les moyens de décharge de pression sont disposés dans la deuxième ouverture.

12. Un dispositif de contrôle de débit selon l'une des revendications 9 à 11, comprenant en outre des moyens pour limiter le déplacement du tiroir secondaire dans la direction vers l'orifice du tiroir principal.

13. Un dispositif de contrôle de débit selon la revendication 12, dans lequel les moyens de limitation comportent une partie d'épaulement formée monobloc avec le tiroir principal.

14. Un dispositif de contrôle de débit selon l'une des revendications 9 à 13, comprenant en outre un ressort (9) disposé dans l'alésage principal (19) du tiroir principal (6) pour solliciter le tiroir secondaire (5) dans la direction s'éloignant de l'orifice (4) du tiroir principal.

15. Un dispositif de contrôle de débit selon l'une des revendications 9 à 14, dans lequel l'alésage principal (19) du tiroir principal (6) comporte des première et deuxième chambres de pression (24, 25); et dans lequel le tiroir principal est mobile en réponse à une différence de pression entre la première et la deuxième chambres de pression.

16. Un dispositif de contrôle de débit selon l'une des revendications 9 à 15, dans lequel le tiroir secondaire comporte deux parties de portée (13, 14) présentant des surfaces de section transversale différentes ; et dans lequel le débit de fluide est soumis à une diminution pas à pas de débit pour réduire le débit proportionnellement à la pression de la pompe, en réponse aux différences de pression à travers les parties de portée.

17. Un dispositif de contrôle de débit selon l'une des revendications 9 à 16, dans lequel le tiroir secondaire présente une partie conique (12) qui s'étend dans l'orifice (4) du tiroir principal pour former un orifice variable en coopération avec l'orifice (4) du tiroir principal; et dans lequel la partie conique du tiroir secondaire réduit le volume de fluide traversant l'orifice du tiroir principal lorsque le tiroir secondaire est déplacé vers l'extérieur dans l'alésage principal du tiroir principal dans la direction vers l'orifice du tiroir principal.
